# EUROPÄISCHE PATENTSCHRIFT

(11) **EP 3 785 978 B1**
(45) Veröffentlichungstag und Bekanntmachung des Hinweises auf die Patenterteilung: **14.12.2022**
(21) Anmeldenummer: 20190624.5
(22) Anmeldetag: 12.08.2020
(51) Int. Cl.: B60L 50/60, B60L 58/20

(54) **FAHRZEUG UND VERFAHREN ZU DESSEN BETRIEB**
VEHICLE AND METHOD FOR ITS OPERATION
VÉHICULE ET SON PROCÉDÉ DE FONCTIONNEMENT

(30) Priorität: 02.09.2019 DE 102019213204
(43) Veröffentlichungstag der Anmeldung: 03.03.2021
(73) Patentinhaber: Siemens Mobility GmbH, 81739 München (DE)
(72) Erfinder: Probst, Sebastian, 90408 Nürnberg (DE); Ruckes, Jonas, 91058 Erlangen (DE)

(56) Entgegenhaltungen:
- DE-A1-102009 034 180
- DE-A1-102013 016 569
- DE-A1-102015 217 832
- DE-A1-102016 009 016

## Beschreibung

Die Erfindung bezieht sich auf ein Schienenfahrzeug, mit mindestens einem ersten und einem zweiten Energiespeicher, von denen der erste Energiespeicher während der Fahrt auf- und entladbar ist sowie schneller als der zweite Energiespeicher bei ansteigendem Energiebedarf Energie zur Verfügung stellen kann.

Ein solches Fahrzeug ist beispielsweise aus dem Europäischen Patent EP 3 162 612 B1 bekannt. Bei dem dort beschriebenen Fahrzeug erfolgt ein Umladen von Energie aus einem ersten Energiespeicher in einen zweiten Energiespeicher aufgrund von Referenzfahrdaten, die bei Referenzfahrten des Fahrzeugs auf zuvor abgefahrenen Streckenabschnitten ermittelt worden sind.

Aus der Offenlegungsschrift DE 10 2015 217 832 A1 ist ein Bremsassistent für ein Kraftfahrzeug bekannt. Das Kraftfahrzeug weist eine elektrische Antriebsmaschine sowie einen ersten elektrischen Energiespeicher mit einer geringen Kapazität und einer hohen Aufnahmegeschwindigkeit, beispielsweise mehrere Kondensatoren, und einen zweiten elektrischen Energiespeicher mit einer hohen Kapazität und einer geringen Aufnahmegeschwindigkeit, beispielsweise eine Batterie, auf. Eine Steuereinrichtung steuert ein Laden der Energiespeicher bei einer Verzögerung und ein Entladen der Energiespeicher bei einem Beschleunigen des Fahrzeugs abhängig von insbesondere Informationen über eine maximal zulässige Geschwindigkeit und Steigungen bzw. Gefälle auf der von dem Fahrzeug befahrenen Strecke.

Aus der Offenlegungsschrift DE 10 2013 016 569 A1 ist ferner ein Betriebsverfahren für einen Hybridantrieb eines Kraftfahrzeugs, insbesondere zur Auswahl optimaler Betriebsmodi des Hybridantriebs entlang einer Fahrtroute, bekannt.

Der Erfindung liegt die Aufgabe zugrunde, ein Fahrzeug der oben genannten Art weiter zu optimieren.

Diese Aufgabe wird erfindungsgemäß durch ein Schienenfahrzeug mit den Merkmalen gemäß Patentanspruch 1 gelöst. Vorteilhafte Ausgestaltungen des erfindungsgemäßen Schienenfahrzeugs sind in Unteransprüchen angegeben.

Danach ist erfindungsgemäß vorgesehen, dass das Schienenfahrzeug eine Fahrstrategieermittlungseinrichtung aufweist, die auf der Basis zumindest von Fahrzeugdaten und Streckendaten eine die Fahrweise des Fahrzeugs über der Zeit festlegende Fahrstrategie berechnet, die die Sollfahrweise des Fahrzeugs über der Zeit in einem nächsten Streckenabschnitt, der sich bis zu einem nächsten Fahrtziel erstreckt, festlegt, wobei die Fahrzeugdaten das Fahrzeug und die Streckendaten den nächsten Streckenabschnitt beschreiben, das Fahrzeug eine Ladestrategieermittlungseinrichtung aufweist, die für die Fahrt bis zum nächsten Fahrtziel auf der Basis der von der Fahrstrategieermittlungseinrichtung ermittelten Fahrstrategie eine Ladestrategie ermittelt, die das Laden des ersten Energiespeichers während der Fahrt mit Energie des zweiten Energiespeichers festlegt, und die Fahrstrategieermittlungseinrichtung mit einer Fahrzeugassistenzeinrichtung in Verbindung steht oder einen Bestandteil einer Fahrzeugassistenzeinrichtung bildet, die einem Fahrzeugführer des Fahrzeugs auf der Basis der von der Fahrstrategieermittlungseinrichtung ermittelten Fahrstrategie Fahrzeugsteuerdaten akustisch und/oder visuell anzeigt, anhand derer der Fahrzeugführer das Fahrzeug unter Einhaltung der Fahrstrategie der Fahrstrategieermittlungseinrichtung steuern kann, wobei dem Schienenfahrzeug ein Fahrplan vorgegeben ist, der das Befahren des jeweils nächsten Schienenstreckenabschnitts zeitlich festlegt, und wobei die Fahrstrategieermittlungseinrichtung die Fahrstrategie unter Berücksichtigung des einzuhaltenden Fahrplans ermittelt.

Die Fahrstrategieermittlungseinrichtung ermittelt die Fahrstrategie somit erfindungsgemäß unter Berücksichtigung des einzuhaltenden Fahrplans, und die Ladestrategieermittlungseinrichtung ermittelt die Ladestrategie auf der Basis der Fahrstrategie und damit mittelbar unter Berücksichtigung des einzuhaltenden Fahrplans.

Ein wesentlicher Vorteil des erfindungsgemäßen Schienenfahrzeug ist darin zu sehen, dass bei diesem keine Referenzdaten, die sich auf vorangegangene Fahrten beziehen, notwendig sind. Die erfindungsgemäß vorgesehene Fahrstrategieermittlungseinrichtung ermöglicht ein Ermitteln einer Fahrstrategie lediglich auf der Basis von Fahrzeugdaten, Streckendaten sowie eines Fahrplans und erfordert somit keine vorherigen Referenzfahrten.

Ein weiterer wesentlicher Vorteil des erfindungsgemäßen Schienenfahrzeug besteht darin, dass Abweichungen der realen Fahrweise von einer erwarteten bzw. in der Fahrstrategie ermittelten Fahrweise minimiert werden können, da die erfindungsgemäß mit der Fahrstrategieermittlungseinrichtung gekoppelte Fahrzeugassistenzeinrichtung in vorteilhafter Weise Fahrzeugsteuerdaten akustisch und/oder visuell anzeigt, die einem Fahrzeugführer das Führen des Schienenfahrzeug unter Einhaltung der Fahrstrategie der Fahrstrategieermittlungseinrichtung ermöglichen, sodass die auf der Basis der Fahrstrategie ermittelte Ladestrategie tatsächlich in optimaler Weise anwendbar ist.

Die Fahrstrategieermittlungseinrichtung berücksichtigt bei der Berechnung der Fahrstrategie vorzugsweise auch den Ladezustand des ersten Energiespeichers zum Zeitpunkt der Berechnung.

Vorteilhaft ist es, wenn die Fahrstrategieermittlungseinrichtung im Rahmen der Berechnung der Fahrstrategie Fahrspielberechnungen durchführt und anhand der im Rahmen der Fahrspielberechnungen ermittelten Fahrspiele die Fahrstrategie berechnet.

Bei einer bevorzugten Ausführungsvariante ist vorgesehen, dass das Schienenfahrzeug eine Bewertungseinrichtung aufweist und im Rahmen der Berechnung der Fahr- und Ladestrategie einen oder mehrere Iterationsschritte durchführt, bei denen jeweils
- in einem ersten Teilschritt die Fahrstrategieermittlungseinrichtung eine vorläufige Fahrstrategie berechnet,
- in einem zweiten Teilschritt die Ladestrategieermittlungseinrichtung für die von der Fahrstrategieermittlungseinrichtung ermittelte vorläufige Fahrstrategie eine vorläufige Ladestrategie ermittelt,
- in einem dritten Teilschritt die Bewertungseinrichtung die vorläufige Ladestrategie unter Berücksichtigung eines Bewertungskriteriums oder mehrerer Bewertungskriterien bewertet und
- die Bewertungseinrichtung die vorläufige Fahrstrategie und die vorläufige Ladestrategie als endgültige Fahrstrategie und endgültige Ladestrategie für die Fahrt freigibt, wenn
- im Falle eines Bewertungskriteriums - das Bewertungskriterium erfüllt ist oder - im Falle mehrerer Bewertungskriterien - alle oder zumindest eine Untergruppe an Bewertungskriterien erfüllt sind, und andernfalls in einem oder mehreren nachfolgendem Iterationsschritten die Teilschritte sooft wiederholt werden, bis das Bewertungskriterium oder alle bzw. zumindest eine Untergruppe an Bewertungskriterien erfüllt werden.

Bei der letztgenannten Ausführungsvariante ist es vorteilhaft, wenn die Bewertungseinrichtung das oder zumindest eines der Bewertungskriterien als nicht erfüllt ansieht, wenn gemäß der vorläufigen Ladestrategie während der Fahrt der Ladezustand des ersten Energiespeichers unter 0 % fallen müsste oder einen vorgegebenen Maximalwert übersteigen müsste.

Auch ist es vorteilhaft, wenn das Bewertungskriterium oder zumindest eines der Bewertungskriterien die Reduktion der Lebensdauer des zweiten Energiespeichers betrifft, insbesondere unter Heranziehung einer Kostenfunktion.

Die Fahrzeugassistenzeinrichtung ermittelt vorzugsweise während der Fahrt zum nächsten Fahrtziel Abweichungen des tatsächlichen Fahrtverlaufs von der Fahrstrategie. Im Falle einer Abweichung über ein vorgegebenes Maß hinaus berechnet die Fahrstrategieermittlungseinrichtung vorzugsweise eine aktualisierte Fahrstrategie und die Ladestrategieermittlungseinrichtung eine aktualisierte Ladestrategie. Letztgenannte Fahr- und Ladestrategie werden vorzugsweise für die weitere Fahrt bis zum nächsten Fahrtziel herangezogen.

Auch ist es von Vorteil, wenn die Fahrstrategieermittlungseinrichtung die Fahrstrategie errechnet auf der Basis eines vorgegebenen einzuhaltenden Fahrplans, dem Ist-Zustand des Fahrzeugs, dem Energieverbrauch des Fahrzeugs, Wetterprognosedaten und/oder Ergebnissen von Fahrspielrechnungen für den nächsten Streckenabschnitt.

Die Ladestrategieermittlungseinrichtung ermittelt die Ladestrategie vorzugsweise mit dem Ziel, einen energiesparenden, verschleißarmen und/oder lebensdauerschonenden Ladevorgang zu ermöglichen.

Die Fahrstrategieermittlungseinrichtung berücksichtigt bevorzugt einen, mehrere oder alle der nachfolgenden Bedingungen, Aspekte, Ziele oder Algorithmen:
- Fahrplan,
- Streckendaten, insbesondere Daten bezüglich der Elektrifizierung und Einspeiseleistung von Netz und/oder Ladestationen, Tankstellen, bezüglich Streckengradienten, bezüglich Kurvenradien, bezüglich Haltepunkten, bezüglich Kilometrierung, bezüglich Geschwindigkeitsbegrenzungen und/oder bezüglich Streckensignalen,
- Modellierungsparameter des Schienenfahrzeug, insbesondere die maximale Leistungsaufnahme,
- Modellierung der Energiespeicher,
- Modellierung des elektrischen Antriebssystems des Schienenfahrzeug,
- Modellierung von Verlustparametern,
- Ist-Zustand von Fahrzeugkomponenten, insbesondere der Batterie oder Ladezustände,
- Temperaturen (z.B. Außen- und Fahrgastraumtemperatur),
- Spannungen,
- Ströme,
- Kühlwassertemperatur,
- voraussichtliche Fahrzeit im elektrifizierten Abschnitt,
- Standzeit an Ladestation,
- Traktionsleistung als Funktion der Zeit,
- Traktionsenergieverbrauch,
- HBU/Bordnetz-Verbrauch,
- minimaler Zielladezustand, um den nächsten nicht elektrifizierten Abschnitt zu überwinden (insbesondere aus Reichweitenprognose),
- Optimierungsalgorithmus, der basierend auf der Modellierung von Live-Daten, Rand- und Nebenbedingungen, und Prognosedaten das optimale Ladeprofil gemäß einer Kostenfunktion für den ersten Energiespeicher berechnet.

Die Fahrstrategieermittlungseinrichtung, die Ladestrategieermittlungseinrichtung, die Bewertungseinrichtung und/oder die Fahrzeugassistenzeinrichtung sind vorzugsweise durch Softwaremodule gebildet, die von einer oder mehreren Recheneinrichtungen des Schienenfahrzeug, insbesondere einer Fahrzeugsteuerungseinrichtung, ausgeführt werden.

Der erste Energiespeicher ist bevorzugt ein elektrischer Energiespeicher, insbesondere eine Batterie oder ein Kondensator, oder umfasst bevorzugt eine Batterie oder einen Kondensator.

Der zweite Energiespeicher umfasst bevorzugt eine Brennstoffzelle mit einem Hilfsspeicher in Form eines Wasserstoffspeichers und/oder einen Verbrennungsmotor mit einem Hilfsspeicher in Form eines mit fossilem Treibstoff und/oder Biokraftstoff befüllbaren oder gefüllten Treibstoffbehälters.

Die Erfindung bezieht sich darüber hinaus auf ein Verfahren zum Betreiben eines Schienenfahrzeug, das mindestens einen ersten und einen zweiten Energiespeicher aufweist, von denen der erste Energiespeicher während der Fahrt auf- und entladbar ist sowie schneller als der zweite Energiespeicher bei ansteigendem Energiebedarf Energie zur Verfügung stellen kann.

Erfindungsgemäß ist vorgesehen, dass von einer Fahrstrategieermittlungseinrichtung des Schienenfahrzeugs auf der Basis zumindest von Fahrzeugdaten und Streckendaten eine die Fahrweise des Schienenfahrzeugs über der Zeit festlegende Fahrstrategie berechnet wird, die die Sollfahrweise des Fahrzeugs über der Zeit in einem nächsten Streckenabschnitt, der sich bis zu einem nächsten Fahrtziel erstreckt, festlegt, wobei die Fahrzeugdaten das Schienenfahrzeug und die Streckendaten den nächsten Streckenabschnitt beschreiben, von einer Ladestrategieermittlungseinrichtung des Schienenfahrzeugs für die Fahrt bis zum nächsten Fahrtziel auf der Basis der zuvor ermittelten Fahrstrategie eine Ladestrategie ermittelt wird, die das Laden des ersten Energiespeichers während der Fahrt mit Energie des zweiten Energiespeichers festlegt, und eine Fahrzeugassistenzeinrichtung einem Fahrzeugführer des Schienenfahrzeugs auf der Basis der von der Fahrstrategieermittlungseinrichtung ermittelten Fahrstrategie Fahrzeugsteuerdaten akustisch und/oder visuell anzeigt, anhand derer der Fahrzeugführer das Schienenfahrzeug unter Einhaltung der Fahrstrategie der Fahrstrategieermittlungseinrichtung steuern kann, wobei dem Schienenfahrzeug ein Fahrplan vorgegeben ist, der das Befahren des jeweils nächsten Schienenstreckenabschnitts zeitlich festlegt, und wobei von der Fahrstrategieermittlungseinrichtung die Fahrstrategie unter Berücksichtigung des einzuhaltenden Fahrplans ermittelt wird.

Bezüglich der Vorteile des erfindungsgemäßen Verfahrens sowie bezüglich vorteilhafter Ausgestaltungen des erfindungsgemäßen Verfahrens sei auf die obigen Ausführungen im Zusammenhang mit dem erfindungsgemäßen Schienenfahrzeug sowie dessen vorteilhafter Ausgestaltungen verwiesen.

Die Erfindung wird nachfolgend anhand von Ausführungsbeispielen näher erläutert; dabei zeigen beispielhaft
- Figur 1: ein erstes Ausführungsbeispiel für ein erfindungsgemäßes Fahrzeug, anhand dessen beispielhaft ein Ausführungsbeispiel für das erfindungsgemäße Verfahren erläutert wird,
- Figur 2: ein zweites Ausführungsbeispiel für ein erfindungsgemäßes Fahrzeug, anhand dessen ein zweites Ausführungsbeispiel für das erfindungsgemäße Verfahren erläutert wird, und
- Figur 3: ein Flussdiagramm zur Veranschaulichung der Arbeitsweise des Fahrzeugs und des Verfahrens gemäß Figur 2.

In den Figuren werden für identische oder vergleichbare Komponenten stets dieselben Bezugszeichen verwendet.

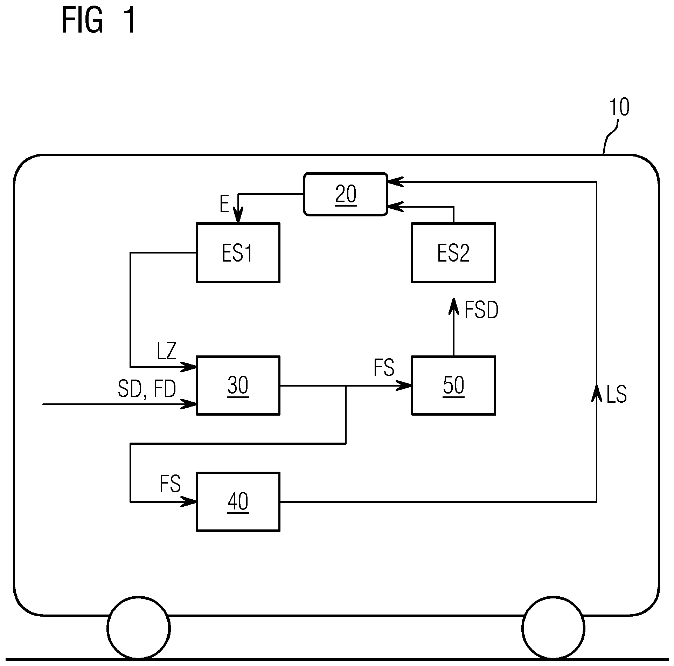

Die Figur 1 zeigt ein Fahrzeug 10, das mit einem aus Gründen der Übersicht nicht weiter dargestellten Antrieb ausgestattet ist. Zur Energieversorgung des nicht weiter dargestellten Antriebs dienen mindestens zwei Energiespeicher, nämlich ein erster Energiespeicher ES1 und ein zweiter Energiespeicher ES2.

Nachfolgend wird beispielhaft davon ausgegangen, dass der erste Energiespeicher ES1 während der Fahrt auf- und entladbar ist, indem zum Aufladen Energie E aus dem zweiten Energiespeicher ES2 entnommen und in den ersten Energiespeicher ES1 eingespeist wird und zum Entladen Energie aus dem ersten Energiespeicher ES1 entnommen und zum Betreiben des nicht weiter dargestellten Antriebs verwendet wird.

Außerdem wird nachfolgend beispielhaft davon ausgegangen, dass der erste Energiespeicher ES1 schneller als der zweite Energiespeicher ES2 bei plötzlich ansteigendem Energiebedarf Energie zur Verfügung stellen kann, sodass während der Fahrt des Fahrzeugs 10 während eines plötzlich ansteigenden Energiebedarfs dieser erste Engergiespeicher ES1 zur Speisung des Antriebs zur Verfügung steht, während der zweite Energiespeicher ES2 wegen seines trägeren Verhaltens dies nicht leisten kann.

Der erste Energiespeicher ES1 ist vorzugsweise ein elektrischer Energiespeicher, insbesondere eine Batterie oder ein Kondensator. Der zweite Energiespeicher ES1 wird vorzugsweise durch eine Brennstoffzelle und einen Hilfsspeicher in Form eines Wasserstoffspeichers gebildet; alternativ kann der zweite Energiespeicher ES2 in vorteilhafter Weise durch einen Verbrennungsmotor und einen Hilfsspeicher in Form eines mit fossilem Treibstoff und/oder Biokraftstoff befüllbaren oder gefüllten Treibstoffbehälters gebildet werden.

Zum Laden des ersten Energiespeichers ES1 mit Energie E des zweiten Energiespeichers ES2 weist das Fahrzeug 10 eine Ladesteuereinrichtung 20 auf, die auf der Basis einer vorgegebenen Ladestrategie LS das Entnehmen von Energie E aus dem zweiten Energiespeicher ES2 zum Aufladen des ersten Energiespeichers ES1 während der Fahrt steuert.

Das Fahrzeug 10 umfasst darüber hinaus eine Fahrstrategieermittlungseinrichtung 30, die auf der Basis von Fahrzeugdaten FD und Streckendaten SD eine die Fahrweise des Fahrzeugs 10 über der Zeit festlegende Fahrstrategie FS berechnet, die die Sollfahrweise des Fahrzeugs 10 über der Zeit in einem nächsten Streckenabschnitt, der sich bis zu einem nächsten Fahrtziel erstreckt, festlegt. Die Fahrzeugdaten FD beschreiben dabei das Fahrzeug 10 und enthalten vorzugsweise zumindest Informationen bzw. Angaben zum Energieverbrauch, zur Beschleunigung und zur Höchstgeschwindigkeit.

Die Streckendaten SD beschreiben den jeweils nächsten Streckenabschnitt, der sich bis zum nächsten Fahrtziel erstreckt, und schließen vorzugsweise Informationen bezüglich Geschwindigkeitsbegrenzungen, Gefälle, Steigungen, Krümmungsradien von nicht geradlinigen Streckenabschnitten und einzuhaltende Fahrplandaten im Falle eines einzuhaltenden Fahrplans ein.

Die Fahrstrategieermittlungseinrichtung 30 berücksichtigt bei der Ermittlung der jeweiligen Fahrstrategie FS vorzugsweise den Ladezustand LZ des ersten Energiespeichers ES1 zum Zeitpunkt der Berechnung der Fahrstrategie FS.

Die Sollfahrweise des Fahrzeugs 10 über der Zeit berücksichtigt vorzugsweise auch variable Optimierungsparameter, wie beispielsweise eine gewünschte Beschleunigung oder eine gewünschte Höchstgeschwindigkeit während der Fahrt innerhalb des nächsten Streckenabschnitts. Lassen sich die Vorgaben in den Streckendaten SD (z. B. Fahrplanvorgaben) oder Fahrzeugdaten FD (z. B. Bremsvermögen) mit den variablen Optimierungsparametern nicht vereinbaren, so können beispielsweise letztgenannte verändert werden, um eine mit den Streckendaten SD und den Fahrzeugdaten FD in Einklang stehende Fahrstrategie FS zu ermitteln oder aber eine Berechnung einer anderen Fahrstrategie FS zu ermöglichen, wenn die berechnete Fahrstrategie FS ungeeignet ist, beispielsweise weil sie keine geeignete Ladestrategie ermöglicht.

Das Fahrzeug 10 umfasst darüber hinaus eine Ladestrategieermittlungseinrichtung 40, die für die Fahrt bis zum jeweils nächsten Fahrtziel auf der Basis der von der Fahrstrategieermittlungseinrichtung 30 ermittelten Fahrstrategie FS eine Ladestrategie LS ermittelt, die das Laden des ersten Energiespeichers ES1 während der Fahrt mit Energie E des zweiten Energiespeichers ES2 festlegt. Die Ladestrategie LS wird von der Ladestrategieermittlungseinrichtung 40 zur Ladesteuereinrichtung 20 übermittelt, die auf der Basis der Ladestrategie LS das Aufladen des ersten Energiespeichers ES1 bzw. das Umladen der beiden Energiespeicher ES1 und ES2 während der Fahrt durchführt.

Das Fahrzeug 10 gemäß Figur 1 ist darüber hinaus mit einer Fahrzeugassistenzeinrichtung 50 ausgestattet, die mit der Fahrstrategieermittlungseinrichtung 30 in Verbindung steht.

Die Fahrzeugassistenzeinrichtung 50 ist dazu ausgebildet, einem Fahrzeugführer des Fahrzeugs 10 Fahrzeugsteuerdaten FSD akustisch und/oder visuell anzuzeigen, die dem Fahrzeugführer ein Führen des Fahrzeugs 10 auf der Basis bzw. unter Einhaltung der von der Fahrstrategieermittlungseinrichtung 30 ermittelten Fahrstrategie FS zu ermöglichen.

Durch die Verbindung zwischen der Fahrstrategieermittlungseinrichtung 30 und der Fahrzeugassistenzeinrichtung 50 ist es bei dem Fahrzeug 10 in vorteilhafter Weise möglich, dass ein Fahrzeugführer des Fahrzeugs 10 dieses tatsächlich so steuern kann, dass die von der Fahrstrategieermittlungseinrichtung 30 ermittelte Fahrstrategie FS für die Fahrt im nächsten Streckenabschnitt tatsächlich eingehalten wird bzw. eingehalten werden kann und die auf der Basis dieser Fahrstrategie FS ermittelte Ladestrategie LS auch sinnvoll herangezogen werden kann. Würde beispielsweise der Fahrer des Fahrzeugs 10 die Fahrstrategie FS der Fahrstrategieermittlungseinrichtung 30 nicht einhalten, sei es bewusst oder unbewusst, so würde die auf der Basis dieser Fahrstrategie FS ermittelte Ladestrategie LS mit überwiegender Wahrscheinlichkeit nicht die optimale Ladestrategie LS bilden, so dass das Umladen von Energie E von dem zweiten Energiespeicher ES2 in den ersten Energiespeicher ES1 unter Umständen zur Unzeit, in unnötig hohem Maße oder verspätet erfolgen würde, sodass entweder einer der beiden Energiespeicher ES1 oder ES2 oder beide Energiespeicher Schaden nehmen könnten.

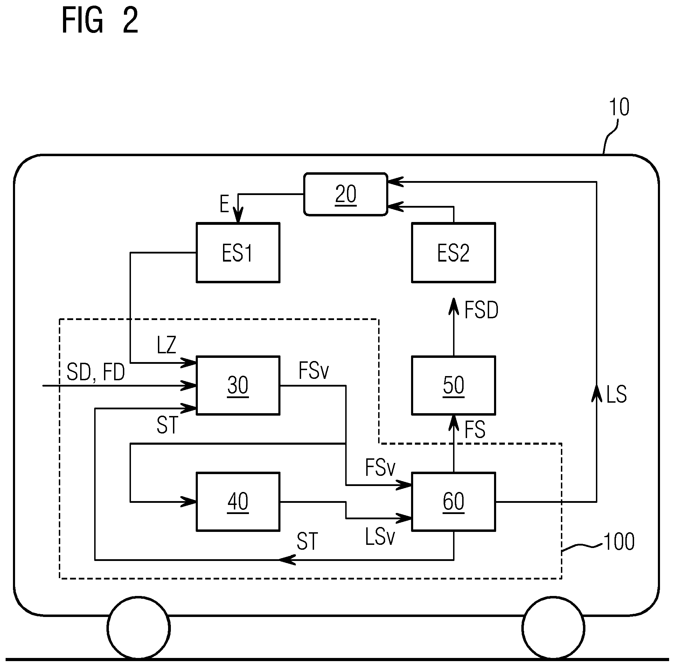

Die Figur 2 zeigt ein zweites Ausführungsbeispiel für ein Fahrzeug 10, das mit einem ersten Energiespeicher ES1 und einem zweiten Energiespeicher ES2 ausgestattet ist, wie dies im Zusammenhang mit der Figur 1 bereits erläutert wurde. Im Unterschied zu dem Ausführungsbeispiel gemäß Figur 1 weist das Fahrzeug 10 gemäß Figur 2 eine Bewertungseinrichtung 60 auf, die gemeinsam mit der Fahrstrategieermittlungseinrichtung 30 und der Ladestrategieermittlungseinrichtung 40 eine Steuerschleife 100 bildet.

Die von der Fahrstrategieermittlungseinrichtung 30 ermittelte Fahrstrategie FS wird - anders als bei dem Ausführungsbeispiel gemäß Figur 1 - nicht unmittelbar als endgültige Fahrstrategie FS zur Fahrzeugassistenzeinrichtung 50 übermittelt, sondern zunächst lediglich als vorläufige Fahrstrategie FSv zur Ladestrategieermittlungseinrichtung 40 übermittelt. Die Ladestrategieermittlungseinrichtung 40 berechnet auf der Basis der vorläufigen Fahrstrategie FSv eine vorläufige Ladestrategie LSv, die zur Bewertungseinrichtung 60 übermittelt wird.

Die Bewertungseinrichtung 60 entscheidet, ob die vorläufige Ladestrategie LSv als endgültige Ladestrategie LS zur Ladesteuereinrichtung 20 übermittelt wird und ob die vorläufige Fahrstrategie FSv als endgültige Fahrstrategie FS von der Fahrzeugassistenzeinrichtung 50 zur Erzeugung der Fahrzeugsteuerdaten FSD zugrunde gelegt werden soll.

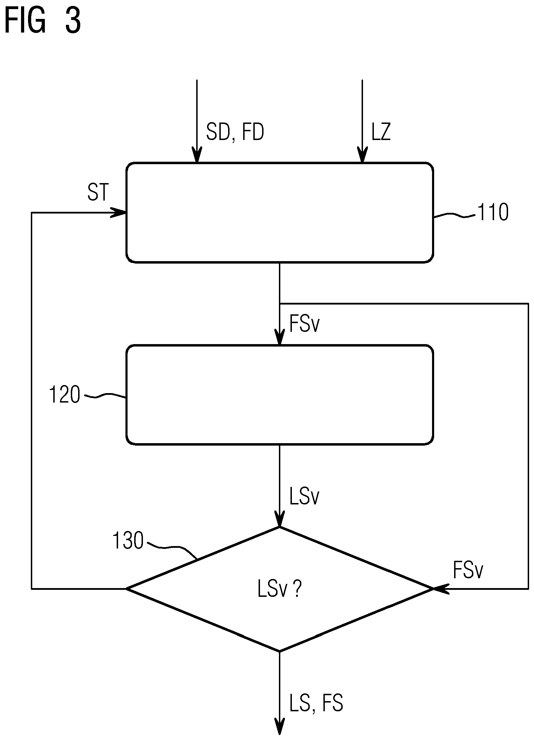

Die Figur 3 zeigt die Arbeitsweise der Steuerschleife 100 und die der Bewertungseinrichtung 60 gemäß Figur 2 näher im Detail:
In einem ersten Teilschritt 110 wird die Fahrstrategieermittlungseinrichtung 30 zunächst eine vorläufige Fahrstrategie FSv berechnen, die zur Ladestrategieermittlungseinrichtung 40 übermittelt wird. Hierzu zieht sie die Streckendaten SD und die Fahrzeugdaten FD heran.

In einem zweiten Teilschritt 120 wird die Ladestrategieermittlungseinrichtung 40 für die von der Fahrstrategieermittlungseinrichtung 30 ermittelte vorläufige Fahrstrategie FSv eine vorläufige Ladestrategie LSv ermitteln und zur Bewertungseinrichtung 60 übertragen.

In einem dritten Teilschritt 130 wird die Bewertungseinrichtung 60 die vorläufige Ladestrategie LSv unter Berücksichtigung eines oder mehrerer Bewertungskriterien bewerten. Stellt die Bewertungseinrichtung 60 im Rahmen der Bewertung fest, dass alle Bewertungskriterien oder zumindest eine vorgegebene Mindestmenge an Bewertungskriterien erfüllt werden, so gibt sie die vorläufige Ladestrategie LSv als endgültige Ladestrategie LS frei und überträgt diese zur Ladesteuereinrichtung 20. Darüber hinaus gibt sie die vorläufige Fahrstrategie FSv frei und überträgt diese als endgültige Fahrstrategie FS zur Fahrzeugassistenzeinrichtung 50, damit die Fahrzeugassistenzeinrichtung 50 auf der Basis der Fahrstrategie FS die Fahrzeugsteuerdaten FSD erzeugen kann.

Stellt die Bewertungseinrichtung 60 fest, dass die vorläufige Ladestrategie LSv eines oder mehrere der Bewertungskriterien nicht oder nicht ausreichend erfüllt, so erzeugt sie ausgangsseitig ein Steuersignal ST, das eine Neuberechnung der vorläufigen Fahrstrategie FSv durch die Fahrstrategieermittlungseinrichtung 30 initiiert. Das Erzeugen des Steuersignals ST kann beispielsweise notwendig sein, wenn die Bewertungseinrichtung 60 feststellt, dass während der Fahrt im nächsten Streckenabschnitt der erste Energiespeicher ES1 einen Ladezustand von unter 0 % erreichen müsste, was technisch nicht realisierbar wäre, oder einen vorgegebenen Maximalwert überschreiten müsste, was den ersten Energiespeicher ES1 zerstören oder dessen Lebensdauer signifikant reduzieren würde.

Bei Vorliegen des Steuersignals ST wird die Fahrstrategieermittlungseinrichtung 30 eine neue vorläufige Fahrstrategie FSv ermitteln und diese zur Ladestrategieermittlungseinrichtung 40 übermitteln, damit diese eine neue vorläufige Ladestrategie LSv ermitteln kann, die wiederum von der Bewertungseinrichtung 60 neu bewertet werden kann.

Um bei der Berechnung der neuen vorläufigen Fahrstrategie FSv ein anderes Berechnungsergebnis zu ermöglichen, wird die Fahrstrategieermittlungseinrichtung 30 vorzugsweise zumindest einen variablen Optimierungsparameter (siehe oben) für die Berechnung verändern: Beispielsweise kann sie die maximal gewünschte Beschleunigung während der Fahrt innerhalb des nächsten Streckenabschnitts reduzieren, um den ersten Energiespeicher ES1 zu entlasten; alternativ oder zusätzlich kann sie die maximal gewünschte Höchstgeschwindigkeit während der Fahrt innerhalb des nächsten Streckenabschnitts reduzieren, um den Energieverbrauch insgesamt zu senken und dadurch beide Energiespeicher ES1 und ES2 zu entlasten.

Ergibt die Prüfung der neuen vorläufigen Ladestrategie LSv, dass diese den vorgegebenen Bewertungskriterien genügt, so erfolgt die Freigabe der jeweiligen vorläufigen Fahrstrategie FSv als endgültige Fahrstrategie FS und die Freigabe der vorläufigen Ladestrategie LSv als endgültige Ladestrategie LS, wie bereits erläutert wurde.

### Bezugszeichenliste

- 10: Fahrzeug
- 20: Ladesteuereinrichtung
- 30: Fahrstrategieermittlungseinrichtung
- 40: Ladestrategieermittlungseinrichtung
- 50: Fahrzeugassistenzeinrichtung
- 60: Bewertungseinrichtung
- 100: Steuerschleife
- 110: Teilschritt
- 120: Teilschritt
- 130: Teilschritt

- E: Energie
- ES1: erster Energiespeicher
- ES2: zweiter Energiespeicher
- FD: Fahrzeugdaten
- FS: Fahrstrategie
- FSD: Fahrzeugsteuerdaten
- FSv: vorläufige Fahrstrategie
- LS: Ladestrategie
- LSv: vorläufige Ladestrategie
- LZ: Ladezustand
- SD: Streckendaten
- ST: Steuersignal

## Patentansprüche

1. Schienenfahrzeug (10), mit mindestens einem ersten und einem zweiten Energiespeicher (ES1, ES2), von denen der erste Energiespeicher (ES1) während der Fahrt auf- und entladbar ist sowie schneller als der zweite Energiespeicher (ES2) bei ansteigendem Energiebedarf Energie (E) zur Verfügung stellen kann,
wobei
- das Schienenfahrzeug (10) eine Fahrstrategieermittlungseinrichtung (30) aufweist, die auf der Basis zumindest von Fahrzeugdaten (FD) und Streckendaten (SD) eine die Fahrweise des Schienenfahrzeugs (10) über der Zeit festlegende Fahrstrategie (FS) berechnet, die die Sollfahrweise des Schienenfahrzeugs (10) über der Zeit in einem nächsten Streckenabschnitt, der sich bis zu einem nächsten Fahrtziel erstreckt, festlegt, wobei die Fahrzeugdaten (FD) das Schienenfahrzeug (10) und die Streckendaten (SD) den nächsten Streckenabschnitt beschreiben,
- das Schienenfahrzeug (10) eine Ladestrategieermittlungseinrichtung (40) aufweist, die für die Fahrt bis zum nächsten Fahrtziel auf der Basis der von der Fahrstrategieermittlungseinrichtung (30) ermittelten Fahrstrategie (FS) eine Ladestrategie (LS) ermittelt, die das Laden des ersten Energiespeichers (ES1) während der Fahrt mit Energie (E) des zweiten Energiespeichers (ES2) festlegt, und
- die Fahrstrategieermittlungseinrichtung (30) mit einer Fahrzeugassistenzeinrichtung (50) in Verbindung steht oder einen Bestandteil einer Fahrzeugassistenzeinrichtung (50) bildet, die einem Fahrzeugführer des Schienenfahrzeugs (10) auf der Basis der von der Fahrstrategieermittlungseinrichtung (30) ermittelten Fahrstrategie (FS) Fahrzeugsteuerdaten (FSD) akustisch und/oder visuell anzeigt, anhand derer der Fahrzeugführer das Schienenfahrzeug (10) unter Einhaltung der Fahrstrategie (FS) der Fahrstrategieermittlungseinrichtung (30) steuern kann,
- wobei dem Schienenfahrzeug (10) ein Fahrplan vorgegeben ist, der das Befahren des jeweils nächsten Schienenstreckenabschnitts zeitlich festlegt, und
- **dadurch gekennzeichnet dass** die Fahrstrategieermittlungseinrichtung (30) die Fahrstrategie (FS) unter Berücksichtigung des einzuhaltenden Fahrplans ermittelt.

2. Schienenfahrzeug (10) nach Anspruch 1,
**dadurch gekennzeichnet, dass** die Fahrstrategieermittlungseinrichtung (30) bei der Berechnung der Fahrstrategie (FS) den Ladezustand des ersten Energiespeichers (ES1) zum Zeitpunkt der Berechnung berücksichtigt.

3. Schienenfahrzeug (10) nach einem der voranstehenden Ansprüche,
**dadurch gekennzeichnet, dass** die Fahrstrategieermittlungseinrichtung (30) im Rahmen der Berechnung der Fahrstrategie (FS) Fahrspielberechnungen durchführt und anhand der im Rahmen der Fahrspielberechnungen ermittelten Fahrspiele die Fahrstrategie (FS) berechnet.

4. Schienenfahrzeug (10) nach einem der voranstehenden Ansprüche,
**dadurch gekennzeichnet, dass** das Schienenfahrzeug (10) eine Bewertungseinrichtung (60) aufweist und im Rahmen der Berechnung der Fahr- und Ladestrategie (FS, LS) einen oder mehrere Iterationsschritte durchführt, bei denen jeweils
- in einem ersten Teilschritt (110) die Fahrstrategieermittlungseinrichtung (30) eine vorläufige Fahrstrategie (FSv) berechnet,
- in einem zweiten Teilschritt (120) die Ladestrategieermittlungseinrichtung (40) für die von der Fahrstrategieermittlungseinrichtung (30) ermittelte vorläufige Fahrstrategie (FSv) eine vorläufige Ladestrategie (LSv) ermittelt,
- in einem dritten Teilschritt (130) die Bewertungseinrichtung (60) die vorläufige Ladestrategie (LSv) unter Berücksichtigung eines Bewertungskriteriums oder mehrerer Bewertungskriterien bewertet und
- die Bewertungseinrichtung (60) die vorläufige Fahrstrategie (FSv) und die vorläufige Ladestrategie (LSv) als endgültige Fahrstrategie (FS) und endgültige Ladestrategie (LS) für die Fahrt freigibt, wenn - im Falle eines Bewertungskriteriums - das Bewertungskriterium erfüllt ist oder
- im Falle mehrerer Bewertungskriterien - alle oder zumindest eine Untergruppe an Bewertungskriterien erfüllt sind, und andernfalls in einem oder mehreren nachfolgendem Iterationsschritten die Teilschritte (110-130) sooft wiederholt werden, bis das Bewertungskriterium oder alle bzw. zumindest eine Untergruppe an Bewertungskriterien erfüllt werden.

5. Schienenfahrzeug (10) nach Anspruch 4,
**dadurch gekennzeichnet, dass** die Bewertungseinrichtung (60) das oder zumindest eines der Bewertungskriterien als nicht erfüllt ansieht, wenn gemäß der vorläufigen Ladestrategie (LS) während der Fahrt der Ladezustand des ersten Energiespeichers (ES1) unter 0 % fallen müsste oder einen vorgegebenen Maximalwert übersteigen müsste.

6. Schienenfahrzeug (10) nach Anspruch 4 oder 5,
**dadurch gekennzeichnet, dass** das Bewertungskriterium oder zumindest eines der Bewertungskriterien die Reduktion der Lebensdauer des zweiten Energiespeichers (ES2) betrifft, insbesondere unter Heranziehung einer Kostenfunktion.

7. Schienenfahrzeug (10) nach einem der voranstehenden Ansprüche,
**dadurch gekennzeichnet, dass**
- die Fahrzeugassistenzeinrichtung (50) während der Fahrt zum nächsten Fahrtziel Abweichungen des tatsächlichen Fahrtverlaufs von der Fahrstrategie (FS) ermittelt und
- im Falle einer Abweichung über ein vorgegebenes Maß hinaus die Fahrstrategieermittlungseinrichtung (30) eine aktualisierte Fahrstrategie (FS) und die Ladestrategieermittlungseinrichtung (40) eine aktualisierte Ladestrategie (LS) berechnet und letztgenannte Fahr- und Ladestrategie (FS, LS) für die weitere Fahrt bis zum nächsten Fahrtziel herangezogen werden.

8. Schienenfahrzeug (10) nach einem der voranstehenden Ansprüche,
**dadurch gekennzeichnet, dass** die Fahrstrategieermittlungseinrichtung (30) die Fahrstrategie (FS) errechnet auf der Basis eines vorgegebenen einzuhaltenden Fahrplans, dem Ist-Zustand des Schienenfahrzeugs (10), dem Energieverbrauch des Schienenfahrzeugs (10), Wetterprognosedaten und/oder Ergebnissen von Fahrspielrechnungen für den nächsten Streckenabschnitt.

9. Schienenfahrzeug (10) nach einem der voranstehenden Ansprüche,
**dadurch gekennzeichnet, dass** die Ladestrategieermittlungseinrichtung (40) die Ladestrategie (LS) ermittelt mit dem Ziel, einen energiesparenden, verschleißarmen und/oder lebensdauerschonenden Ladevorgang zu ermöglichen.

10. Schienenfahrzeug (10) nach einem der voranstehenden Ansprüche,
**dadurch gekennzeichnet, dass** die Fahrstrategieermittlungseinrichtung (30) einen, mehrere oder alle der nachfolgenden Bedingungen, Aspekte, Ziele oder Algorithmen berücksichtigt:
- Fahrplan,
- Streckendaten (SD), insbesondere Daten bezüglich der Elektrifizierung und Einspeiseleistung von Netz und/oder Ladestation, bezüglich Streckengradienten, bezüglich Kurvenradien, bezüglich Haltepunkten, bezüglich Kilometrierung, bezüglich Geschwindigkeitsbegrenzungen und/oder bezüglich Streckensignalen,
- Modellierungsparameter des Schienenfahrzeugs (10), insbesondere die maximale Leistungsaufnahme,
- Modellierung der Energiespeicher (ES1, ES2),
- Modellierung des elektrischen Antriebssystems des Schienenfahrzeugs (10),
- Modellierung von Verlustparametern,
- Ist-Zustand von Fahrzeugkomponenten, insbesondere der Batterie oder Ladezustände,
- Temperaturen, insbesondere Außen- und Fahrgastraumtemperatur,
- Spannungen,
- Ströme,
- Kühlwassertemperatur,
- voraussichtliche Fahrzeit im elektrifizierten Abschnitt,
- Standzeit an Ladestation oder Tankstelle,
- Traktionsleistung als Funktion der Zeit,
- Traktionsenergieverbrauch,
- HBU/Bordnetz-Verbrauch,
- minimaler Zielladezustand, um den nächsten nicht elektrifizierten Abschnitt zu überwinden (insbesondere aus Reichweitenprognose),
- Optimierungsalgorithmus, der basierend auf der Modellierung von Live-Daten, Rand- und Nebenbedingungen, und Prognosedaten das optimale Ladeprofil gemäß einer Kostenfunktion für den ersten Energiespeicher (ES1) berechnet.

11. Schienenfahrzeug (10) nach einem der voranstehenden Ansprüche,
**dadurch gekennzeichnet, dass** die Fahrstrategieermittlungseinrichtung (30), die Ladestrategieermittlungseinrichtung (40), die Bewertungseinrichtung (60) und die Fahrzeugassistenzeinrichtung (50) durch Softwaremodule gebildet sind, die von einer oder mehreren Recheneinrichtungen des Schienenfahrzeugs (10), insbesondere einer Fahrzeugsteuerungseinrichtung, ausgeführt werden.

12. Schienenfahrzeug (10) nach einem der voranstehenden Ansprüche,
**dadurch gekennzeichnet, dass**
- der erste Energiespeicher (ES1) ein elektrischer Energiespeicher, insbesondere eine Batterie oder ein Kondensator, ist oder eine Batterie oder einen Kondensator umfasst und/oder
- der zweite Energiespeicher (ES2) eine Brennstoffzelle und einen Hilfsspeicher in Form eines Wasserstoffspeichers umfasst und/oder
- der zweite Energiespeicher (ES2) einen Verbrennungsmotor und einen Hilfsspeicher in Form eines mit fossilem Treibstoff und/oder Biokraftstoff befüllbaren oder gefüllten Treibstoffbehälters umfasst.

13. Verfahren zum Betreiben eines Schienenfahrzeugs (10), das mindestens einen ersten und einen zweiten Energiespeicher (ES1, ES2) aufweist, von denen der erste Energiespeicher (ES1) während der Fahrt auf- und entladbar ist sowie schneller als der zweite Energiespeicher (ES2) bei ansteigendem Energiebedarf Energie (E) zur Verfügung stellen kann,
wobei
- von einer Fahrstrategieermittlungseinrichtung (30) des Schienenfahrzeugs (10) auf der Basis zumindest von Fahrzeugdaten (FD) und Streckendaten (SD) eine die Fahrweise des Schienenfahrzeugs (10) über der Zeit festlegende Fahrstrategie (FS) berechnet wird, die die Sollfahrweise des Schienenfahrzeugs (10) über der Zeit in einem nächsten Streckenabschnitt, der sich bis zu einem nächsten Fahrtziel erstreckt, festlegt, wobei die Fahrzeugdaten (FD) das Schienenfahrzeug (10) und die Streckendaten (SD) den nächsten Streckenabschnitt beschreiben,
- von einer Ladestrategieermittlungseinrichtung (40) des Schienenfahrzeugs (10) für die Fahrt bis zum nächsten Fahrtziel auf der Basis der zuvor ermittelten Fahrstrategie (FS) eine Ladestrategie (LS) ermittelt wird, die das Laden des ersten Energiespeichers (ES1) während der Fahrt mit Energie (E) des zweiten Energiespeichers (ES2) festlegt, und
- eine Fahrzeugassistenzeinrichtung (50) einem Fahrzeugführer des Schienenfahrzeugs (10) auf der Basis der von der Fahrstrategieermittlungseinrichtung (30) ermittelten Fahrstrategie (FS) Fahrzeugsteuerdaten (FSD) akustisch und/oder visuell anzeigt, anhand derer der Fahrzeugführer das Schienenfahrzeug (10) unter Einhaltung der Fahrstrategie (FS) der Fahrstrategieermittlungseinrichtung (30) steuern kann,
- wobei dem Schienenfahrzeug (10) ein Fahrplan vorgegeben ist, der das Befahren des jeweils nächsten Schienenstreckenabschnitts zeitlich festlegt, und
- **dadurch gekennzeichnet dass** von der Fahrstrategieermittlungseinrichtung (30) die Fahrstrategie (FS) unter Berücksichtigung des einzuhaltenden Fahrplans ermittelt wird.

## Claims

1. Rail vehicle (10), with at least a first and a second energy storage unit (ES1, ES2), of which the first energy storage unit (ES1) can be charged and discharged while travelling and can also provide energy (E) more quickly than the second energy storage unit (ES2) in the event of increasing energy demand,
wherein
- the rail vehicle (10) has a travel strategy ascertaining device (30) which, on the basis of at least vehicle data (FD) and route data (SD), calculates a travel strategy (FS), which stipulates the mode of operation of the rail vehicle (10) over time and stipulates the intended mode of operation of the rail vehicle (10) over time in a next route section that extends up to a next travel destination, wherein the vehicle data (FD) describes the rail vehicle (10) and the route data (SD) describes the next route section,
- the rail vehicle (10) has a charging strategy ascertaining device (40) which, for the travel up to the next travel destination, on the basis of the travel strategy (FS) ascertained by the travel strategy ascertaining device (30), ascertains a charging strategy (LS), which stipulates the charging of the first energy storage unit (ES1) with energy of the second energy storage unit (ES2) during the travel, and
- the travel strategy ascertaining device (30) is connected to a vehicle assistance device (50) or forms a constituent part of a vehicle assistance device (50), which acoustically and/or visually indicates vehicle control data (FSD) to a vehicle driver of the rail vehicle (10) on the basis of the travel strategy (FS) ascertained by the travel strategy ascertaining device (30), on the basis of which vehicle control data (FSD) the vehicle driver is able to control the rail vehicle (10) while adhering to the travel strategy (FS) of the travel strategy ascertaining device (30),
- wherein a timetable, which stipulates the timing of driving on the next rail route section in each case, is predefined for the rail vehicle (10), and
- **characterised in that**
the travel strategy ascertaining device (30) ascertains the travel strategy (FS) while taking into consideration the timetable to be adhered to.

2. Rail vehicle (10) according to claim 1,
**characterised in that**
when calculating the travel strategy (FS), the travel strategy ascertaining device (30) takes into consideration the charging state of the first energy storage unit (ES1) at the point in time of the calculation.

3. Rail vehicle (10) according to one of the preceding claims, **characterised in that**
as part of calculating the travel strategy (FS), the travel strategy ascertaining device (30) performs travel cycle calculations and calculates the travel strategy (FS) on the basis of the travel cycles ascertained as part of the travel cycle calculations.

4. Rail vehicle (10) according to one of the preceding claims, **characterised in that**
the rail vehicle (10) has an assessment device (60) and, as part of calculating the travel and charging strategy (FS, LS), performs one or more iteration steps, in which in each case
- in a first substep (110) the travel strategy ascertaining device (30) calculates a preliminary travel strategy (FSv),
- in a second substep (120) the charging strategy ascertaining device (40) ascertains a preliminary charging strategy (LSv) for the preliminary travel strategy (FSv) ascertained by the travel strategy ascertaining device (30),
- in a third substep (130) the assessment device (60) assesses the preliminary charging strategy (LSv) while taking into consideration an assessment criterion or a plurality of assessment criteria and
- the assessment device (60) approves the preliminary travel strategy (FSv) and the preliminary charging strategy (LSv) as final travel strategy (FS) and final charging strategy (LS) for travel if - in the case of one assessment criterion - the assessment criterion is met or - in the case of a plurality of assessment criteria - all or at least a subgroup of assessment criteria are met, and otherwise, in one or more following iteration steps, repeats the substeps (110-130) until the assessment criterion or all or at least a subgroup of assessment criteria are met.

5. Rail vehicle (10) according to claim 4,
**characterised in that**
the assessment device (60) considers the or at least one of the assessment criteria to not be met if, according to the preliminary charging strategy (LS), the charging state of the first energy storage unit (ES1) would have to fall below 0 % or would exceed a predefined maximum value while travelling.

6. Rail vehicle (10) according to claim 4 or 5,
**characterised in that**
the assessment criterion or at least one of the assessment criteria relate(s) to the reduction of the service life of the second energy storage unit (ES2), in particular while making use of a cost function.

7. Rail vehicle (10) according to one of the preceding claims, **characterised in that**
- the vehicle assistance device (50) ascertains deviations of the actual travel profile from the travel strategy (FS) while travelling to the next travel destination and
- in the event of a deviation beyond a predefined amount, the travel strategy ascertaining device (30) calculates an updated travel strategy (FS) and the charging strategy ascertaining device (40) calculates an updated charging strategy (LS) and the latter travel and charging strategy (FS, LS) are made use of for the further travel up to the next travel destination.

8. Rail vehicle (10) according to one of the preceding claims, **characterised in that**
the travel strategy ascertaining device (30) calculates the travel strategy (FS) on the basis of a predefined timetable to be adhered to, the actual state of the rail vehicle (10), the energy consumption of the rail vehicle (10), weather forecast data and/or results of travel cycle calculations for the next route section.

9. Rail vehicle (10) according to one of the preceding claims, **characterised in that**
the charging strategy ascertaining device (40) ascertains the charging strategy (LS) with the aim of enabling an energysaving, low-wear and/or service life-protecting charging procedure.

10. Rail vehicle (10) according to one of the preceding claims,
**characterised in that**
the travel strategy ascertaining device (30) takes into consideration one, more or all of the following conditions, aspects, aims or algorithms:
- timetable,
- travel data (SD), in particular data with regard to the electrification and infeed power of the network and/or charging station, with regard to route gradients, with regard to curve radii, with regard to stopping points, with regard to chainage, with regard to speed limits and/or with regard to route signals,
- modelling parameters of the rail vehicle (10), in particular the maximum power consumption,
- modelling of the energy storage units (ES1, ES2),
- modelling of the electrical drive system of the rail vehicle (10),
- modelling of loss parameters,
- actual state of vehicle components, in particular of the battery or charging states,
- temperatures, in particular external and passenger compartment temperature,
- voltages,
- currents,
- cooling water temperature,
- estimated travel time in the electrified section,
- standstill time at charging station or filling station,
- traction power as a function of time,
- traction energy consumption,
- ACU/on-board power supply consumption,
- minimum target charging state, in order to overcome the next non-electrified section (in particular from a range prediction),
- optimisation algorithm, which calculates the optimum charging profile, on the basis of the modelling of live data, limiting and secondary conditions, and prediction data, according to a cost function for the first energy storage unit (ES1).

11. Rail vehicle (10) according to one of the preceding claims,
**characterised in that**
the travel strategy ascertaining device (30), the charging strategy ascertaining device (40), the assessment device (60) and the vehicle assistance device (50) are formed by software modules, which are executed by one or more computing devices of the rail vehicle (10), in particular a vehicle controller device,

12. Rail vehicle (10) according to one of the preceding claims,
**characterised in that**
- the first energy storage unit (ES1) is an electrical energy storage unit, in particular a battery or a capacitor, or comprises a battery or a capacitor and/or
- the second energy storage unit (ES2) comprises a fuel cell and an auxiliary storage unit in the form of a hydrogen storage unit and/or
- the second energy storage unit (ES2) comprises a combustion engine and an auxiliary storage unit in the form of a fuel container that can be or is filled with fossil fuel and/or biofuel.

13. Method for operating a rail vehicle (10), which has at least a first and a second energy storage unit (ES1, ES2), of which the first energy storage unit (ES1) can be charged and discharged while travelling and can also provide energy (E) more quickly than the second energy storage unit (ES2) in the event of increasing energy demand,
wherein
- by way of a travel strategy ascertaining device (30) of the rail vehicle (10), on the basis of at least vehicle data (FD) and route data (SD), a travel strategy (FS) is calculated, which stipulates the mode of operation of the rail vehicle (10) over time and stipulates the intended mode of operation of the rail vehicle (10) over time in a next route section that extends up to a next travel destination, wherein the vehicle data (FD) describes the rail vehicle (10) and the route data (SD) describes the next route section,
- by way of a charging strategy ascertaining device (40) of the rail vehicle (10), for the travel up to the next travel destination, on the basis of the previously ascertained travel strategy (FS), a charging strategy (LS) is ascertained, which stipulates the charging of the first energy storage unit (ES1) with energy of the second energy storage unit (ES2) during the travel, and
- a vehicle assistance device (50) acoustically and/or visually indicates vehicle control data (FSD) to a vehicle driver of the rail vehicle (10) on the basis of the travel strategy (FS) ascertained by the travel strategy ascertaining device (30), on the basis of which vehicle control data (FSD) the vehicle driver is able to control the rail vehicle (10) while adhering to the travel strategy (FS) of the travel strategy ascertaining device (30),
- wherein a timetable, which stipulates the timing of driving on the next rail route section in each case, is predefined for the rail vehicle (10), and
- **characterised in that**
the travel strategy (FS) is ascertained by way of the travel strategy ascertaining device (30) while taking into consideration the timetable to be adhered to.

## Revendications

1. Véhicule (10) ferroviaire, comprenant au moins un premier et un deuxième accumulateurs (ES1, ES2) d'énergie, dont le premier (ES1) peut, pendant l'itinéraire, être chargé et déchargé, ainsi qui peut mettre à disposition de l'énergie (E) plus rapidement que le deuxième accumulateur (ES2) d'énergie, lorsque le besoin d'énergie augmente,
dans lequel
- le véhicule (10) ferroviaire a un dispositif de détermination (30) de la stratégie de circulation, qui calcule, sur la base d'au moins des données (FD) de véhicule et des données (SD) de voie, une stratégie (FS) de circulation fixant, en fonction du temps, le mode de circulation du véhicule (10) ferroviaire, laquelle stratégie fixe le mode de circulation de consigne du véhicule (10) ferroviaire, en fonction du temps, dans une section de voie venant immédiatement ensuite, qui s'étend jusqu'à un but d'itinéraire venant immédiatement ensuite, les données (FD) de véhicule décrivant le véhicule (10) ferroviaire et les données (SD) de voie décrivant la section de voie venant immédiatement ensuite,
- le véhicule (10) ferroviaire a un dispositif (40) de détermination de la stratégie de charge, qui détermine pour l'itinéraire jusqu'au but de l'itinéraire venant immédiatement ensuite, sur la base de la stratégie (FS) de circulation déterminée par le dispositif (30) de détermination de la stratégie de circulation, une stratégie (LS) de charge, qui fixe la charge du premier accumulateur (ES1) d'énergie pendant l'itinéraire par l'énergie (E) du deuxième accumulateur (ES2) d'énergie, et
- le dispositif (30) de détermination de la stratégie de circulation est en liaison avec un dispositif (50) d'assistance au véhicule ou forme une partie constituante d'un dispositif (50) d'assistance au véhicule, qui indique acoustiquement et/ou visuellement à un conducteur du véhicule (10) ferroviaire, sur la base de la stratégie (FS) de circulation déterminée par le dispositif (30) de détermination de la stratégie de circulation, des données (FSD) de conduite de véhicule, à l'aide desquelles le conducteur du véhicule (10) ferroviaire peut conduire en respectant la stratégie (FS) de circulation du dispositif (30) de détermination de la stratégie de circulation,
- dans lequel il est prescrit au véhicule (10) ferroviaire un plan de circulation, qui fixe dans le temps comment le tronçon de voie respectif venant immédiatement ensuite doit être emprunté, et
- **caractérisé en ce que** le dispositif (30) de détermination de la stratégie de circulation détermine la stratégie (FS) de circulation en prenant en compte le plan de circulation à respecter.

2. Véhicule (10) ferroviaire suivant la revendication 1, **caractérisé en ce que**
le dispositif (30) de détermination de la stratégie de circulation tient compte, lors du calcul de la stratégie (FS) de circulation, de l'état de charge du premier accumulateur (ES1) d'énergie à l'instant du calcul.

3. Véhicule (10) ferroviaire suivant l'une des revendications précédentes,
**caractérisé en ce que**
le dispositif (30) de détermination de la stratégie de circulation effectue, dans le cadre du calcul de la stratégie (FS) de circulation, des calculs de jeux de circulation et calcule la stratégie (FS) de circulation, à l'aide des jeux de circulation déterminés dans le cadre des calculs de jeux de circulation.

4. Véhicule (10) ferroviaire suivant l'une des revendications précédentes,
**caractérisé en ce que**
le véhicule (10) ferroviaire a un dispositif (60) d'évaluation et effectue, dans le cadre du calcul des stratégies (FS, LS) de circulation et de charge, un ou plusieurs stades d'itérations, dans lesquels respectivement
- dans un premier stade (110) partiel, le dispositif (30) de détermination de la stratégie de circulation calcule une stratégie (FSv) de circulation provisoire,
- dans un deuxième stade (120) partiel, le dispositif (40) de détermination de la stratégie de charge détermine une stratégie (LSv) de charge provisoire pour la stratégie (FSv) de circulation provisoire déterminée par le dispositif (30) de détermination de la stratégie de circulation,
- dans un troisième stade (130) partiel, le dispositif (60) d'évaluation évalue la stratégie (LSv) de charge provisoire en prenant en compte un critère d'évaluation ou plusieurs critères d'évaluation,
- le dispositif (60) d'évaluation valide, pour l'itinéraire, la stratégie (FSv) provisoire de circulation et la stratégie (LSv) provisoire de charge comme stratégie (FS) valable finalement de circulation et comme stratégie (LS) valable finalement de charge, si - dans le cas d'un critère d'évaluation - le critère d'évaluation est satisfait ou - dans le cas de plusieurs critères d'évaluation - si tous ou au moins un sous-groupe de critères d'évaluation sont satisfaits et sinon, dans un ou dans plusieurs stades d'itération suivants, les stades (110 - 130) partiels sont répétés jusqu'à ce que le critère d'évaluation ou tous ou au moins un sous-groupe de critères d'évaluation soit satisfait.

5. Véhicule (10) ferroviaire suivant la revendication 4, **caractérisé en ce que**
le dispositif (60) d'évaluation considère comme n'étant pas satisfait le ou au moins l'un des critères d'évaluation si, conformément à la stratégie (LS) provisoire de charge pendant l'itinéraire, l'état de charge du premier accumulateur (ES1) d'énergie devait s'abaisser en-dessous de 0% ou devait dépasser une valeur maximum donnée à l'avance.

6. Véhicule (10) ferroviaire suivant la revendication 4 ou 5, **caractérisé en ce que**
le critère d'évaluation ou au moins l'un des critères d'évaluation concerne la réduction de la durée du deuxième accumulateur (ES2) d'énergie en tirant parti notamment d'une fonction de coût.

7. Véhicule (10) ferroviaire suivant l'une des revendications précédentes,
**caractérisé en ce que**
- le dispositif (50) d'assistance au véhicule détermine, pendant l'itinéraire vers le but de circulation, qui vient immédiatement ensuite, des écarts de la courbe réelle de l'itinéraire à la stratégie (FS) de circulation, et
- dans le cas d'un écart dépassant une valeur donnée à l'avance, le dispositif (30) de détermination de la stratégie de circulation calcule une stratégie (FS) de circulation mise à jour et le dispositif (40) de détermination de la stratégie de charge calcule une stratégie (LS) de charge mise à jour et on tire parti des stratégies (FS, LS) de charge et de circulation de charge mentionnées en dernier pour le reste de l'itinéraire jusqu'au but de l'itinéraire qui vient immédiatement ensuite.

8. Véhicule (10) ferroviaire suivant l'une des revendications précédentes,
**caractérisé en ce que**
le dispositif (30) de détermination de la stratégie de circulation calcule la stratégie (FS) de circulation sur la base d'un plan de circulation à respecter donné à l'avance, de l'état réel du véhicule (10) ferroviaire, de la consommation d'énergie du véhicule (10) ferroviaire, de données de prévision météorologique et/ou de résultats de calculs de jeux de circulation pour la section de voie qui vient immédiatement ensuite.

9. Véhicule (10) ferroviaire suivant l'une des revendications précédentes,
**caractérisé en ce que**
le dispositif (40) de détermination de la stratégie de charge détermine la stratégie (LS) de charge en vue de rendre possible une opération de charge économisant de l'énergie, donnant peu d'usure et/ou ménageant la durée de vie.

10. Véhicule (10) ferroviaire suivant l'une des revendications précédentes,
**caractérisé en ce que**
le dispositif (30) de détermination de la stratégie de circulation prend en compte un, plusieurs ou toutes les conditions, aspects, buts ou algorithmes suivants :
- plan de circulation,
- données (SD) de voie, notamment données se rapportant à l'électrification et à la puissance d'injection de réseau et/ou de poste de charge, se rapportant à des gradients de voie, se rapportant à des rayons de courbure, se rapportant à des points d'arrêt, se rapportant à du kilométrage, se rapportant à des limites de vitesse et/ou se rapportant à des signaux de voie,
- paramètres de modélisation du véhicule (10) ferroviaire, notamment l'absorption maximum de puissance,
- modélisation des accumulateurs (ES1, ES2) d'énergie,
- modélisation du système d'entraînement électrique du véhicule (10) ferroviaire,
- modélisation de paramètres de perte,
- état réel d'éléments du véhicule, notamment de la batterie ou des états de charge,
- température, notamment température extérieure et température de l'espace réservé aux passagers,
- tension,
- courant,
- température de l'eau de refroidissement,
- temps de circulation prévisible dans la section électrifiée,
- temps de séjour au poste de charge ou au poste de ravitaillement,
- puissance de traction en fonction du temps,
- consommation d'énergie de traction,
- consommation HBU et/ou réseau de bord,
- état de charge cible minimum pour surmonter la section non électrifiée qui vient immédiatement ensuite (notamment pronostic de portée),
- algorithme d'optimisation, qui calcule, sur la base de la modélisation de données en cours, de conditions aux limites et de conditions secondaires et de données de pronostic, le profil de charge le meilleur suivant une fonction de coût pour le premier accumulateur (ES1) d'énergie.

11. Véhicule (10) ferroviaire suivant l'une des revendications précédentes,
**caractérisé en ce que**
le dispositif (30) de détermination de la stratégie de circulation, le dispositif (40) de détermination de la stratégie de charge, le dispositif (60) d'évaluation et le dispositif (50) d'assistance au véhicule sont formés de modules de logiciel, qui sont réalisés par un ou par plusieurs dispositifs informatiques du véhicule (10) ferroviaire, notamment par un dispositif de conduite du véhicule.

12. Véhicule (10) ferroviaire suivant l'une des revendications précédentes,
**caractérisé en ce que**
- le premier accumulateur (ES1) d'énergie est un accumulateur d'énergie électrique, notamment une batterie ou un condensateur ou comprend une batterie ou un condensateur et/ou
- le deuxième accumulateur (ES2) d'énergie comprend une pile à combustible et un accumulateur auxiliaire sous la forme d'un accumulateur d'hydrogène et/ou
- le deuxième accumulateur (ES2) d'énergie comprend un moteur à combustion interne et un accumulateur auxiliaire sous la forme d'un récipient de combustible fossile et/ou de biocarburant.

13. Procédé pour faire fonctionner un véhicule (10) ferroviaire, qui a au moins un premier et un deuxième accumulateurs (ES1, ES2) d'énergie, dont le premier (ES1) peut, pendant l'itinéraire, être chargé et déchargé, ainsi qui peut mettre à disposition de l'énergie (E) plus rapidement que le deuxième accumulateur (ES2) d'énergie, lorsque le besoin d'énergie augmente,
dans lequel
- on calcule, par un dispositif (30) de détermination de la stratégie de circulation du véhicule (10) ferroviaire, sur la base d'au moins des données (FD) de véhicule et des données (SD) de voie, une stratégie (FS) de circulation, fixant en fonction du temps le mode de circulation de consigne du véhicule (10) ferroviaire, dans une section de voie venant immédiatement ensuite, qui s'étend jusqu'à un but venant immédiatement ensuite de l'itinéraire, les données (FD) de véhicule décrivant le véhicule (10) ferroviaire et les données (SD) de voie décrivant la section de voie qui vient immédiatement ensuite,
- on détermine, par un dispositif (40) de détermination de la stratégie de charge du véhicule (10) ferroviaire, pour le trajet jusqu'au but du trajet venant immédiatement ensuite, sur la base de l'énergie (FS) de circulation déterminée auparavant, une stratégie (LS) de charge qui fixe, par l'énergie (E) du deuxième accumulateur (ES2) d'énergie, la charge du premier accumulateur (ES1) d'énergie pendant l'itinéraire, et
- un dispositif (50) d'assistance au véhicule indique acoustiquement et/ou visuellement à un conducteur du véhicule (10) ferroviaire, sur la base de la stratégie (FS) de circulation déterminée par le dispositif (30) de détermination de la stratégie de circulation, des données (FSD) de conduite du véhicule, à l'aide desquelles le conducteur du véhicule (10) ferroviaire peut conduire en respectant la stratégie (FS) de circulation du dispositif (30) de détermination de la stratégie de circulation,
- dans lequel il est prescrit au véhicule (10) ferroviaire un plan de circulation, qui fixe en fonction du temps comment le tronçon respectif de voie venant immédiatement ensuite doit être emprunté,
- **caractérisé en ce que** l'on détermine par le dispositif (30) de détermination de la stratégie de circulation, la stratégie (FS) de circulation en tenant en compte du plan de circulation à respecter.
